# FASCICULE DE BREVET EUROPEEN

(11) **EP 2 855 213 B1**
(45) Date de publication et mention de la délivrance du brevet: **06.02.2019**
(21) Numéro de dépôt: 13720987.0
(22) Date de dépôt: 05.04.2013
(51) Int. Cl.: B60R 21/34, B62D 25/10

(54) **STRUCTURE DE L'AVANT D'UN VÉHICULE AUTOMOBILE PERMETTANT D'AMORTIR LE CHOC DE LA TÊTE D'UN PIÉTON CONTRE LE CAPOT**
STRUKTUR FÜR DEN FRONTBEREICH EINES KRAFTFAHRZEUGS ZUR LINDERUNG DES AUFPRALLS DES KOPFS EINES FUSSGÄNGERS AUF DER MOTORHAUBE
FRONT STRUCTURE OF AN AUTOMOBILE FOR CUSHIONING THE IMPACT OF THE HEAD OF A PEDESTRIAN AGAINST THE ENGINE HOOD

(30) Priorité: 24.05.2012 FR 1254739
(43) Date de publication de la demande: 08.04.2015
(73) Titulaire: PSA Automobiles SA, 78300 Poissy (FR)
(72) Inventeur: BENANE, Said, 94550 Chevilly Larue (FR)
(74) Mandataire: Fernandez, Francis Lionel
(86) Numéro de dépôt international: PCT/FR2013/050758
(87) Numéro de publication internationale: WO 2013/175086

(56) Documents cités:
- EP-A1- 1 544 082
- EP-A1- 1 767 413
- JP-A- 2006 096 280
- JP-A- 2008 105 497

## Description

La présente invention concerne une structure de l'avant d'un véhicule automobile permettant d'amortir le choc de la tête d'un piéton contre le capot.

L'invention concerne également un véhicule automobile dont la structure de l'avant est conforme à l'invention.

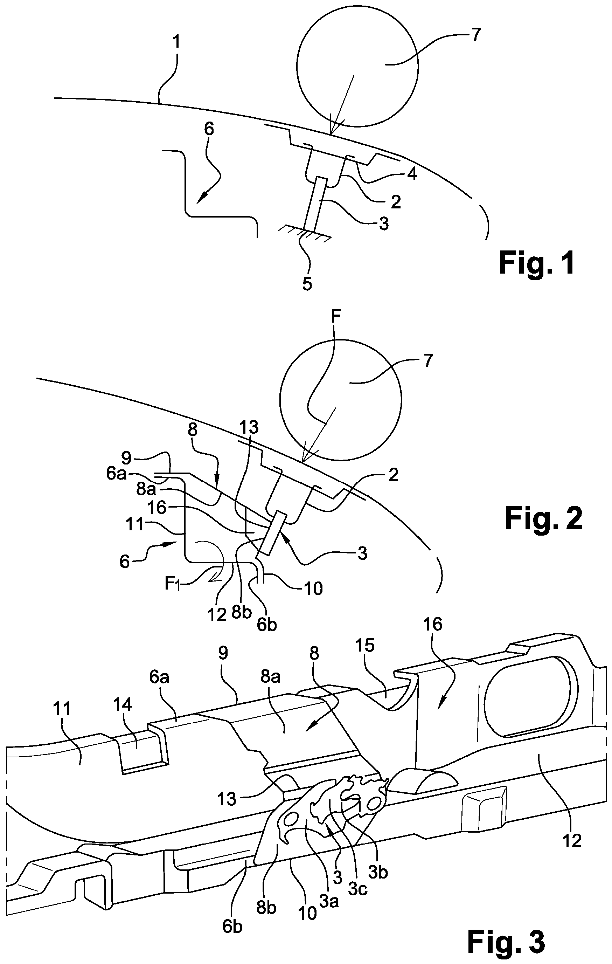

La figure 1 est un schéma montrant en coupe longitudinale une partie de la structure de l'avant d'un véhicule automobile.

Cette structure comprend un capot 1 dont la partie avant comporte un fil de gâche 2 qui coopère avec une serrure 3 fixée sous ce fil pour verrouiller le capot 1 en position fermée.

Le fil de gâche 2 est fixé à une doublure 4 du capot 1.

Cette doublure 4 présente dans la zone de fixation du fil de gâche 2 un renfort (non représenté).

La serrure 3 est fixée sur une partie fixe 5 de la caisse du véhicule.

La structure représentée sur la figure 1 comporte également une façade avant 6 s'étendant sous le capot 1, transversalement par rapport à l'axe longitudinal du véhicule à l'arrière de la serrure 3.

La référence 7 désigne la tête d'un piéton heurtant le capot 1 dans une zone située au-dessus du fil de gâche 2 et de la serrure 3.

Toutes les pièces situées entre le capot 1 et la partie 5 de la caisse, à savoir la doublure renforcée 4, le fil de gâche 2 et la serrure 3, sont des pièces rigides, c'est-à-dire peu déformables sous l'effet du choc de la tête 7 du piéton.

De ce fait, ces pièces ne sont pas capables d'amortir le choc, c'est-à-dire absorber l'énergie de ce choc.

Ainsi, en cas de choc effectué selon les normes du choc piéton, la tête du piéton risque d'être sérieusement blessée.

EP 1 544 082 décrit une face avant de véhicule comprenant une façade structurelle sur laquelle est rapportée et fixée une platine et sur laquelle est fixée la serrure, cette platine présentant une forme d'étrier. Le document EP 1 767 413 A montre une face avant de véhicule automobile selon le préambule de la revendication 1.

Le but de la présente invention est de remédier à cet inconvénient.

Ce but est atteint, selon l'invention, grâce à une structure de l'avant d'un véhicule automobile permettant d'amortir le choc de la tête d'un piéton contre le capot, la partie avant de ce capot comportant un fil de gâche coopérant avec une serrure pour verrouiller le capot en position fermée et une façade avant en tôle s'étendant transversalement sous le capot à l'arrière de la serrure, cette structure comprenant une pièce en tôle sensiblement en forme d'équerre dont l'une des deux ailes est fixée au bord supérieur de la façade avant et l'autre aile est fixée à un bord avant de ladite façade, la serrure étant fixée à ladite autre aile de telle sorte que le choc de la tête d'un piéton sur le capot, encaissé par la serrure puisse être transmis à ladite autre aile, où ladite façade avant comprend une paroi sensiblement verticale comportant ledit bord supérieur et une paroi sensiblement horizontale comportant ledit bord avant, le pli qui relie l'une des deux ailes à l'autre aile de ladite pièce en tôle étant situé au-dessus dudit bord avant de la façade et devant ledit bord supérieur de cette façade.

En cas de choc de la tête d'un piéton sur le capot dans la zone située au-dessus du fil de gâche, ce choc est encaissé par la serrure.

Etant donné que la serrure est fixée à une partie de la pièce en tôle en forme d'équerre, cette dernière transmet l'énergie du choc à la façade avant qui en se déformant va absorber l'énergie du choc.

De préférence, ladite pièce en tôle est libre par rapport à ladite façade à l'exception des extrémités de ses deux ailes qui sont fixées à la façade.

Dans un mode de réalisation préféré de l'invention, ladite pièce en tôle est une bande de tôle pliée.

Cette pièce en tôle est ainsi particulièrement facile et peu coûteuse à fabriquer.

Ainsi, en cas de choc piéton, les efforts exercés sur le fil de gâche et la serrure sont transmis à l'aile de la pièce en tôle reliée au bord avant de la façade, ce qui va entraîner une rotation de cette façade autour d'un axe parallèle à la direction transversale de cette façade.

Cette rotation de la façade absorbe l'énergie du choc et permet ainsi de limiter considérablement les risques de blessure du piéton.

D'après l'invention, l'aile qui est reliée au bord supérieur de la façade est inclinée vers le bas et l'aile qui est reliée au bord avant de la façade est inclinée vers l'avant.

Ainsi, l'inclinaison de l'aile qui est reliée au bord avant de la façade, à laquelle est fixée la serrure, est telle que cette aile est située sensiblement dans la direction des efforts exercés lors du choc de la tête d'un piéton, ce qui permet de transmettre ces efforts d'une manière optimale au bord avant de la façade.

De préférence également, le pli qui relie les deux ailes de ladite pièce en tôle est parallèle au bord supérieur et au bord avant de la façade.

Selon d'autres particularités avantageuses de l'invention :
- la serrure comprend un boîtier dans lequel est logé un crochet pivotant pouvant coopérer avec le fil de gâche pour verrouiller le capot en position fermée, ledit boîtier comportant deux grandes faces parallèles, le crochet étant monté pivotant suivant un axe perpendiculaire aux deux grandes faces du boîtier et l'une de ces deux grandes faces étant fixée à l'aile de ladite pièce en tôle qui s'étend entre le pli et le bord avant de la façade ;
- la façade comprend de part et d'autre de ladite pièce en tôle, une zone emboutie.

Selon un autre aspect, l'invention concerne également un véhicule automobile dont la structure de l'avant est conforme à l'invention telle que définie ci-dessus.

D'autres particularités et avantages de l'invention apparaîtront encore tout au long de la description ci-après.

Aux dessins annexés, donnés à titre d'exemples, non limitatifs :
- la figure 2 est une vue en coupe longitudinale de la structure de l'avant d'un véhicule automobile, selon l'invention,
- la figure 3 est une vue en perspective montrant l'avant de la façade, la pièce en tôle qui est reliée à la façade et la serrure fixée à l'avant de cette pièce en tôle.

La figure 2 représente la structure de l'avant d'un véhicule automobile permettant d'amortir le choc de la tête 7 d'un piéton contre le capot 1 du véhicule.

La partie avant de ce capot 1 comporte un fil de gâche 2 coopérant avec une serrure 3.

Ce fil de gâche 2 est fixé à la doublure 4 du capot 1.

La structure comprend en outre une façade avant en tôle 6 s'étendant transversalement sous le capot 1 à l'arrière de la serrure 3.

Conformément à l'invention, la structure comprend une pièce en tôle 8 sensiblement en forme d'équerre dont l'une 8a des deux ailes est fixée au bord supérieur 6a de la façade avant 6 et l'autre aile 8b est fixée à un bord avant 6b de la façade 6.

De plus, la serrure 3 est fixée à ladite autre aile 8b de la pièce 8, de telle sorte que le choc de la tête 7 d'un piéton sur le capot 1, encaissé par la serrure 3 puisse être transmis à ladite autre aile 8b.

La transmission des efforts vers la façade 6 va provoquer la déformation de cette dernière, comme on l'expliquera plus en détail plus loin.

La pièce en tôle 8 est libre par rapport à la façade 6 à l'exception des extrémités 9, 10 de ses deux ailes 8a, 8b qui sont soudées respectivement au bord supérieur 6a et au bord avant 6b de la façade 6.

La figure 3 montre que la pièce en tôle 8 est une bande de tôle pliée.

Dans l'exemple représenté sur les figures 2 et 3, la façade avant 6 comprend une paroi 11 sensiblement verticale comportant ledit bord supérieur 6a et une paroi sensiblement horizontale 12 comportant ledit bord avant 6b.

Le pli 13 qui relie l'une 8a des deux ailes à l'autre aile 8b de la pièce en tôle 8 est situé au-dessus du bord avant 6b de la façade 6 et devant le bord supérieur 6a de cette façade 6.

En outre, l'aile 8a qui est reliée au bord supérieur 6a de la façade 6 est inclinée vers le bas et l'aile 8b qui est reliée au bord avant 6b de la façade 6 est inclinée vers l'avant, comme montré notamment par la figure 2.

Par ailleurs, le pli 13 qui relie les deux ailes 8a, 8b de la pièce en tôle 8 est parallèle au bord supérieur 6a et au bord avant 6b de la façade 6.

En outre, les deux ailes 8a, 8b de la pièce 8 sont reliées l'une à l'autre par un renfort 16 situé au niveau du pli 13 et qui augmente la raideur de la pièce 8.

La serrure 3 comprend, de façon connue, un boîtier 3a dans lequel est logé un crochet pivotant 3b pouvant coopérer avec le fil de gâche 2 pour verrouiller le capot 1 en position fermée.

Le boîtier 3a comportant deux grandes faces parallèles et le crochet 3b est monté pivotant suivant un axe 3c perpendiculaire aux deux grandes faces du boîtier 3a.

Par ailleurs, l'une des deux grandes faces du boîtier 3a est fixée à l'aile 8b de la pièce en tôle 8 qui s'étend entre le pli 13 et le bord avant 6b de la façade 6.

De plus, comme montré sur la figure 3, la façade 6 comprend de part et d'autre de la pièce en tôle 8, une zone emboutie 14, 15.

On va maintenant expliquer le fonctionnement de la structure que l'on vient de décrire.

En cas de choc de la tête 7 d'un piéton sur la zone du capot 1 montrée par la figure 2, les efforts exercés par le choc sont transmis dans le sens de la flèche F vers le fil de gâche 2 et vers la serrure 3.

Les efforts encaissés par la serrure 3 sont transmis à l'aile 8b de la pièce 8 en forme d'équerre et au bord avant 6b de la façade avant 6.

Les efforts exercés dans le sens de la flèche F sur l'aile 12 de la façade 6 provoquent une rotation de cette dernière dans le sens de la flèche F₁.

Cette mise en rotation est favorisée :
- d'une part par la présence des deux zones embouties 14 et 15 situées de part et d'autre de la pièce en tôle 8 et,
- d'autre part par la présence d'un renfort 16 au niveau du pli 13 entre les deux ailes 8a et 8b de la pièce 8 qui augmente la raideur de ces ailes.

## Revendications

1. Structure de l'avant d'un véhicule automobile permettant d'amortir le choc de la tête (7) d'un piéton contre le capot (1), la partie avant de ce capot (1) comportant un fil de gâche (2) coopérant avec une serrure (3) pour verrouiller le capot (1) en position fermée et une façade avant en tôle (6) s'étendant transversalement sous le capot (1) à l'arrière de la serrure (3), cette structure comprenant une pièce en tôle (8) sensiblement en forme d'équerre dont l'une (8a) des deux ailes est fixée au bord supérieur (6a) de la façade avant (6) et l'autre aile (8b) est fixée à un bord avant (6b) de ladite façade (6), la serrure (3) étant fixée à ladite autre aile (8b) de telle sorte que le choc de la tête (7) d'un piéton sur le capot (1), encaissé par la serrure (3) puisse être transmis à ladite autre aile (8b), où ladite façade avant (6) comprend une paroi sensiblement verticale (11) comportant ledit bord supérieur (6a) et une paroi sensiblement horizontale (12) comportant ledit bord avant (6b), le pli (13) qui relie l'une des deux ailes à l'autre aile de ladite pièce en tôle (8) étant situé au-dessus dudit bord avant (6b) de la façade (6) et devant ledit bord supérieur (6a) de cette façade (6), **caractérisé en ce que** l'aile (8a) qui est reliée au bord supérieur (6a) de la façade (6) étant inclinée vers le bas et l'aile (8b) qui est reliée au bord avant (6b) de la façade (6) étant inclinée vers l'avant.

2. Structure selon la revendication 1, **caractérisée en ce que** ladite pièce en tôle (8) est libre par rapport à ladite façade (6) à l'exception des extrémités de ses deux ailes (8a, 8b).

3. Structure selon l'une des revendications 1 ou 2, **caractérisée en ce que** ladite pièce en tôle (8) est une bande de tôle pliée.

4. Structure selon l'une des revendications 2 ou 3, **caractérisée en ce que** le pli (13) qui relie les deux ailes (8a, 8b) de ladite pièce en tôle (8) est parallèle au bord supérieur (6a) et au bord avant (6b) de la façade (6).

5. Structure selon l'une des revendications 1 à 4, **caractérisée en ce que** la serrure (3) comprend un boîtier (3a) dans lequel est logé un crochet (3b) pivotant pouvant coopérer avec le fil de gâche (2) pour verrouiller le capot (1) en position fermée, ledit boîtier (3a) comportant deux grandes faces parallèles, le crochet (3b) étant monté pivotant suivant un axe (3c) perpendiculaire aux deux grandes faces du boîtier (3a) et l'une de ces deux grandes faces étant fixée à l'aile (8b) de ladite pièce en tôle (8) qui s'étend entre le pli (13) et le bord avant (6b) de la façade (6).

6. Structure selon l'une des revendications 1 à 5, **caractérisée en ce que** la façade (6) comprend de part et d'autre de ladite pièce en tôle (8), une zone emboutie (14, 15).

7. Véhicule automobile dont la structure de l'avant est conforme à l'une des revendications 1 à 6.

## Patentansprüche

1. Struktur für den Frontbereich eines Kraftfahrzeugs, die es ermöglicht, den Aufprall des Kopfes (7) eines Fußgängers auf der Motorhaube (1) zu dämpfen, wobei der Frontbereich dieser Motorhaube (1) einen Türöffnerdraht (2), der mit einem Schloss (3) zusammenwirkt, um die Motorhaube (1) in geschlossener Position zu verriegeln, und eine Frontfläche aus Blech (6) umfasst, die sich quer unter der Motorhaube (1) hinter dem Schloss (3) erstreckt, wobei diese Struktur ein Blechstück (8) im Wesentlichen in Winkelform umfasst, von dem einer der Schenkel (8a) am oberen Rand (6a) der Frontfläche (6) befestigt ist, und der andere Schenkel (8b) an einem vorderen Rand (6b) der Frontfläche (6) befestigt ist, wobei das Schloss (3) an dem anderen Schenkel (8b) befestigt ist, so dass der Aufprall des Kopfes (7) eines Fußgängers auf der Motorhaube (1), den das Schloss (3) erleidet, auf den anderen Schenkel (8b) übertagen werden kann, wo die Frontfläche (6) eine im Wesentlichen vertikale Wand (11), umfassend den oberen Rand (6a), und eine im Wesentlichen horizontale Wand (12), umfassend den vorderen Rand (6b) umfasst, wobei der Falz (13), der einen der zwei Schenkel mit dem anderen Schenkel des Blechstücks (8) verbindet, über dem vorderen Rand (6b) der Frontfläche (6) und vor dem oberen Rand (6a) dieser Frontfläche (6) angeordnet ist, **dadurch gekennzeichnet, dass** der Schenkel (8a), der mit dem oberen Rand (6a) der Frontfläche (6) verbunden ist, nach unten geneigt ist, und der Schenkel (8b), der mit dem vorderen Rand (6b) der Frontfläche (6) verbunden ist, nach vorne geneigt ist.

2. Struktur nach Anspruch 1, **dadurch gekennzeichnet, dass** das Blechstück (8) in Bezug zur Frontfläche (6) frei ist, mit Ausnahme der Enden seiner zwei Schenkel (8a, 8b) .

3. Struktur nach einem der Ansprüche 1 oder 2, **dadurch gekennzeichnet, dass** das Blechstück (8) ein Falzblechstreifen ist.

4. Struktur nach einem der Ansprüche 2 oder 3, **dadurch gekennzeichnet, dass** der Falz (13), der die zwei Schenkel (8a, 8b) des Blechstücks (8) verbindet, zum oberen Rand (6a) und zum vorderen Rand (6b) der Frontfläche (6) parallel ist.

5. Struktur nach einem der Ansprüche 1 bis 4, **dadurch gekennzeichnet, dass** das Schloss (3) ein Gehäuse (3a) umfasst, in dem ein Schwenkhaken (3b) angeordnet ist, der mit dem Türöffnerdraht (2) zusammenwirken kann, um die Motorhaube (1) in geschlossener Position zu verriegeln, wobei das Gehäuse (3a) zwei große parallele Flächen umfasst, wobei der Haken (3b) schwenkbar entlang einer Achse (3c) senkrecht auf die zwei großen Seiten des Gehäuses (3a) montiert ist, und wobei eine dieser zwei großen Seiten am Schenkel (8b) des Blechstücks (8) befestigt ist, der sich zwischen dem Falz (13) und dem vorderen Rand (6b) der Frontfläche (6) erstreckt.

6. Struktur nach einem der Ansprüche 1 bis 5, **dadurch gekennzeichnet, dass** die Frontfläche (6) beiderseits des Blechstücks (8) eine tiefgezogene Zone (14, 15) umfasst.

7. Kraftfahrzeug, dessen Struktur des Frontbereichs einem der Ansprüche 1 bis 6 entspricht.

## Claims

1. A structure of the front of a motor vehicle, for cushioning the impact of a pedestrian's head (7) against the hood (1), the front part of this hood (1) comprising a lock wire (2) cooperating with a lock (3) for locking the hood (1) in a closed position and a front façade (6) consisting of sheet metal extending transversely beneath the hood (1) to the rear of the lock (3), this structure including a sheet metal part (8) substantially in a right-angle shape, one (8a) of the two wings being fixed to the upper edge (6a) of the front façade (6) and the other wing (8b) being fixed to a front edge (6b) of said façade (6), the lock (3) being fixed to said other wing (8b) in such a way that the impact of a pedestrian's head (7) on the hood, taken by the lock (3), can be transmitted to said other wing (8b), where said front façade (6) includes a substantially vertical wall (11) comprising said upper edge (6a) and a substantially horizontal wall (12) comprising said front edge (6b), the fold (13) which connects one of the two wings to the other wing of said sheet metal part (8) being situated above said front edge (6b) of the façade (6) and in front of said upper edge (6a) of this façade (6), **characterized in that** the wing (8a) which is connected to the upper edge (6a) of the façade (6) being inclined downwards and the wing (8b) which is connected to the front edge (6b) of the façade (6) being inclined towards the front.

2. The structure according to Claim 1, **characterized in that** said sheet metal part (8) is free with respect to said façade (6) with the exception of the ends of its two wings (8a, 8b).

3. The structure according to one of Claims 1 or 2, **characterized in that** said sheet metal part (8) is a band of folded sheet metal.

4. The structure according to one of Claims 2 or 3, **characterized in that** the fold (13) which connects the two wings (8a, 8b) of said sheet metal part (8) is parallel to the upper edge (6a) and to the front edge (6b) of the façade (6).

5. The structure according to one of Claims 1 to 4, **characterized in that** the lock (3) includes a casing (3a) in which a pivoting hook (3b) is housed, being able to cooperate with the lock wire (2) to lock the hood (1) in closed position, said casing (3a) comprising two large parallel faces, the hook (3b) being mounted in a pivoting manner following an axis (3c) perpendicular to the two large faces of the casing (3a) and one of these two large faces being fixed to the wing (8b) of said sheet metal part (8) which extends between the fold (13) and the front edge (6b) of said façade (6).

6. The structure according to one of Claims 1 to 5, **characterized in that** the façade (6) includes, on either side of said sheet metal part (8), a stamped zone (14, 15).

7. A motor vehicle, of which the structure of the front is in accordance with one of Claims 1 to 6.
